# EUROPÄISCHE PATENTSCHRIFT

(11) **EP 4 534 353 B1**
(45) Veröffentlichungstag und Bekanntmachung des Hinweises auf die Patenterteilung: **01.04.2026**
(21) Anmeldenummer: 23201219.5
(22) Anmeldetag: 02.10.2023
(51) Int. Cl.: B60R 3/02

(54) **LEITERANORDNUNG, FAHRZEUGAUFBAU UND FAHRZEUG**
LADDER ASSEMBLY, VEHICLE BODY AND VEHICLE
ENSEMBLE D'ÉCHELLE, CARROSSERIE DE VÉHICULE ET VÉHICULE

(43) Veröffentlichungstag der Anmeldung: 09.04.2025
(73) Patentinhaber: Schmitz Cargobull AG, 48341 Altenberge (DE)
(72) Erfinder: DORR, Christoph, 46514 Scharmbeck (DE); MATZNER, Daniel, 49086 Osnabrück (DE); GEROLD, Sebastian, 48691 Vreden (DE)
(74) Vertreter: Liedtke & Partner Patentanwälte

(56) Entgegenhaltungen:
- EP-A1- 3 156 279
- EP-A1- 3 909 807
- DE-A1- 102010 019 569
- US-A- 6 003 633
- US-A1- 2014 167 379
- US-B2- 10 533 374

## Beschreibung

Die Erfindung betrifft eine Leiteranordnung für ein Fahrzeug.

Die Erfindung betrifft weiterhin einen Fahrzeugaufbau und ein Fahrzeug.

Die EP 3 156 279 A1 beschreibt ein Fahrzeug für einen Transport von Transportgütern mit einem Chassis, das ein einer Fahrzeugrückseite zugeordnetes Bauteil umfasst und an seiner Oberseite einen Ladeboden trägt, auf dem ein jeweiliges Transportgut abstellbar ist. An dem Chassis ist zusätzlich eine unterhalb des Ladebodens angeordnete Ausziehleiter vorgesehen. Diese ist an einer ebenfalls von dem Chassis getragenen Führung verschiebbar gelagert, um die Ausziehleiter aus einer Aufbewahrungsstellung, in der sie sich unterhalb des Ladebodens befindet, in eine Gebrauchsstellung zu bringen, in der sie zum Untergrund, auf dem das Fahrzeug steht, geklappt ist, um einen Aufstieg auf den Ladeboden zu ermöglichen.

Weiterhin beschreibt die US 2014/0395474 A1 eine zusammenklappbare Stufenanordnung mit mehreren Stufen und mehrere Wangen, die schwenkbar mit Drehpunkten verbunden sind, die den Stufen zugeordnet sind. Die Stufenanordnung ist mit einer Gleitbaugruppe verbunden, die ausgebildet ist, die Stufenanordnung im zusammengeklappten Zustand in gleitendem Eingriff aufzunehmen.

Aus der US 2014/0167379 A1 ist eine einziehbare Stufenbaugruppe für ein Fahrzeug mit einer Schienenbaugruppe bekannt, die an einem Fahrzeugrahmen unter einem Arbeitsbett montiert ist. Weiterhin ist eine Schwenkbaugruppe vorgesehen, die die Schienen- und Stufenbaugruppe miteinander verbindet. Die Stufenbaugruppe bewegt sich zwischen einer Aufbewahrungsposition, in der sie zwischen Schienen der Schienenbaugruppe angeordnet ist, und einer Betriebsposition, in der sie sich von den Schienen nach außen durch eine Öffnung in einer Wandplatte des Fahrzeugs erstreckt und nach unten zum Boden geneigt ist. Ein klappbarer Handlauf an der Stufenbaugruppe ist wahlweise zwischen einer zusammengeklappten Position und einer ausgefahrenen Position bewegbar. Der Handlauf befindet sich in der ausgefahrenen Position, wenn die Stufenbaugruppe in Betrieb ist, und lässt sich in die zusammengeklappte Position klappen, wenn die Stufenbaugruppe verstaut wird.

Weiterhin ist aus der DE 10 2010 019 569 A1 eine Treppenleiter mit Treppenstufen bekannt, die jeweils mit ihren querseitigen Endbereichen an einem Paar sich gegenüberliegenden Holmen und einem Paar sich gegenüberliegender Stabilisierungsstangen drehgelenkig angeschlagen sind. Die Stabilisierungsstangen und die Holme sind mit jeweils einem ihrer Enden drehgelenkig mit einem Führungsschlitten verbunden, der zusammen mit den Stabilisierungsstangen und den Holmen auf Führungsschienen laufend in einem Aufbewahrungsraum eines Fahrzeugs ein- und ausfahrbar gelagert ist. Die Stabilisierungsstangen und die Holme sind parallel zueinander angeordnet und zusammen mit den Treppenstufen gegeneinander aus einer im ausgefahrenen Zustand des Führungsschlittens schrägen Gebrauchsstellung der Treppenleiter in eine horizontale Einschiebestellung der Treppenleiter einschwenkbar.

Die EP 3 909 807 A1 beschreibt ein Fahrzeug mit einem Fahrzeugaufbau. Der Fahrzeugaufbau umfasst einen Ladebereich, welcher an einer Unterseite von einem Ladeboden begrenzt ist, eine Leiter, welche aus einer Nichtgebrauchsstellung in eine Gebrauchsstellung überführbar ist, in welcher diese einen Aufstieg von einem Untergrund, auf welchem sich das Fahrzeug befindet, auf den Ladeboden ermöglicht, und einen Haltegriff. Der Haltegriff
- ist aus einer Nichtgebrauchsstellung in eine Gebrauchsstellung überführbar,
- umfasst eine Haltegriff-Befestigungsstruktur und
- ist in der Gebrauchsstellung mittels der Haltegriff-Befestigungsstruktur randseitig an dem Ladeboden in einem durch den Aufstiegsbereich der Leiter in seiner Position vorgegebenen Einstiegsbereich zum Ladebereich an einer mit der Haltegriff-Befestigungsstruktur korrelierenden Fahrzeugaufbau-Befestigungsstruktur des Fahrzeugaufbaus befestigbar.

Die US 6 003 633 A beschreibt eine tragbare Leitervorrichtung zur Befestigung an einem Lastwagen oder Anhänger mit mehreren Rungentaschen. Die Leitervorrichtung umfasst
- eine Trägerplatte;
- einen Leiterabschnitt mit mehreren Stufen, die zwischen einem Paar Leiterholmen befestigt sind, wobei der Leiterabschnitt eine Ober- und eine Unterseite aufweist, wobei die jeweiligen Leiterholme schwenkbar an gegenüberliegenden Enden der Trägerplatte befestigt sind, um den Leiterabschnitt zwischen einer Gebrauchsposition, in der der Leiterabschnitt in einem Winkel zur Vertikalen geneigt ist, wobei sich die Unterseite des Leiterabschnitts unterhalb der Trägerplatte befindet, und einer Verstauposition, in der sich die Unterseite des Leiterabschnitts oberhalb der Trägerplatte befindet, zu schwenken,
- ein Verbindungsstück zum Verbinden der Trägerplatte mit einer der Rungentaschen, wobei das Verbindungsstück aus einem rechteckigen Pfosten besteht, der fest mit der Trägerplatte verbunden ist, wobei der Pfosten so bemessen ist, dass er in die Rungentasche eingesetzt werden kann, wobei die Trägerplatte daran gehindert wird, sich um eine vertikale Achse zu drehen, die durch die Rungentasche verläuft,
- einen Handlauf, der an einem der Leiterholme befestigt ist, wobei der Handlauf schwenkbar mit der Leiterstange verbunden ist und
- Mittel zum Verriegeln des Handlaufs in einer ausgefahrenen Position.

Die US 10 533 374 B2 beschreibt eine Ladevorrichtung mit
- einer Treppe mit mindestens zwei Setzstufen und einer Vielzahl von Trittflächen, die zwischen den Setzstufen angeordnet sind,
- einer Plattform, wobei die Treppe an der Plattform schwenkbar befestigt ist und die Plattform eine vorgespannte Verriegelung aufweist und
- einem Griff, wobei der Griff schwenkbar an der Treppe befestigt ist und der Griff so konstruiert und bemessen ist, dass er in einer Aufbewahrungskonfiguration parallel zur Treppe positioniert ist und in einer Betriebskonfiguration so positioniert ist, dass die vorgespannte Verriegelung in den Griff eingreift, um den Griff in einer ausgeklappten Position zu sichern, während sich die Treppe ebenfalls in einer ausgeklappten Position befindet.

Der Erfindung liegt die Aufgabe zu Grunde, eine neuartige Leiteranordnung für ein Fahrzeug, einen neuartigen Fahrzeugaufbau und ein neuartiges Fahrzeug anzugeben.

Die Aufgabe wird erfindungsgemäß gelöst durch
- eine Leiteranordnung, welche die im Anspruch 1 angegebenen Merkmale aufweist,
- einen Fahrzeugaufbau, welcher die im Anspruch 13 angegebenen Merkmale aufweist, und
- ein Fahrzeug, welches die im Anspruch 15 angegebenen Merkmale aufweist.

Vorteilhafte Ausgestaltungen der Erfindung sind Gegenstand der abhängigen Ansprüche.

Die erfindungsgemäße Leiteranordnung für ein Fahrzeug weist zumindest eine Leiter auf, welche aus einer Nichtgebrauchsstellung in eine Gebrauchsstellung überführbar ist, in welcher diese einen Aufstieg von einem Untergrund, auf welchem sich das Fahrzeug befindet, auf einen Ladeboden des Fahrzeugs ermöglicht. Weiterhin weist die Leiteranordnung zumindest eine Haltestange auf, welche aus einer Nichtgebrauchsstellung in eine Gebrauchsstellung überführbar ist und eine Haltestangen-Arretierungsstruktur aufweist.

Weiterhin weist die Leiter eine Aussparung auf, durch welche die Haltestange geführt ist. Die Haltestange ist in der Aussparung in Haltestangen-Längsrichtung verschiebbar angeordnet, wobei die Haltestange zur Überführung von der Nichtgebrauchsstellung in die Gebrauchsstellung um eine quer zu einer Aufstiegsrichtung der Leiter verlaufende Querachse der Leiter in der Aussparung in eine Zwischenstellung schwenkbar ist. Weiterhin weist die Leiter eine in Aufstiegsrichtung unterhalb der Aussparung angeordnete, mit der Haltestangen-Arretierungsstruktur korrespondierende Leiter-Arretierungsstruktur auf, wobei die Haltestange ausgehend von der Zwischenstellung mit einem arretierungsseitigen Ende auf die Leiter-Arretierungsstruktur aufschiebbar oder in die Leiter-Arretierungsstruktur einschiebbar ist. Dabei ist die Haltestange in einem auf die Leiter-Arretierungsstruktur aufgeschobenen oder in die Leiter-Arretierungsstruktur eingeschobenen Zustand in der Gebrauchsstellung arretiert und ein dem arretierungsseitigen Ende gegenüberliegendes freies Ende der Haltestange ist in Aufstiegsrichtung oberhalb der Leiter angeordnet.

Mittels der Leiteranordnung und der in der Gebrauchsstellung arretierbaren Haltestange kann auch bei einer Anordnung der Leiter in einem Bereich an einem Fahrzeugaufbau, von welchem aus ein Greifen eines Nutzers an eine als Haltegriff geeignete Struktur des Fahrzeugaufbaus aufgrund eines zu großen Abstands nicht möglich ist, eine Haltemöglichkeit für den Nutzer bei einem Aufstieg auf den Ladeboden und einen Abstieg vom Ladeboden über die Leiter im Einstiegsbereich sichergestellt werden. Somit ist eine Sicherheit des Nutzers bei einem solchen Aufstieg oder Abstieg signifikant erhöht. Beispielsweise können so ein sicherer Auf- und Abstieg bei einer Leiter, welche mittig zwischen zwei Fahrzeugwänden, die sich außerhalb eines Zugriffsbereichs eines auf der Leiter befindlichen Nutzers befinden, sichergestellt werden. Eine solche Anordnung ist beispielsweise bei einem Fahrzeugaufbau an einem Heck, einer Seite und/oder einer Front möglich. Dadurch, dass die Haltestange an der Leiter selbst arretierbar ist, ist kein zusätzliches Element zur Arretierung der Haltestange erforderlich. Dies ermöglicht eine Material-, Aufwands-, Gewichts- und Kostenreduzierung.

Gemäß einer möglichen Ausgestaltung der Leiteranordnung weist die Leiter zumindest eine Stufe auf, welche eine Trittfläche und eine stirnseitige Fläche aufweist. Dabei erstreckt sich die Aussparung in zumindest einem Abschnitt der Trittfläche und zumindest einem angrenzenden Abschnitt der stirnseitigen Fläche. Eine solche in die Stufe integrierte Ausführung der Aussparung ermöglicht die Anordnung der Haltestange innerhalb einer Kontur der Leiter. Eine solche Anordnung ist besonders bauraumsparend.

Gemäß einer weiteren möglichen Ausgestaltung der Leiteranordnung weist die Leiter-Arretierungsstruktur eine Arretierungs-Aussparung zur Aufnahme der Haltestangen-Arretierungsstruktur auf. Eine solche Arretierungs-Aussparung zur Einführung und Aufnahme der Haltestangen-Arretierungsstruktur ist besonders einfach und mit geringem Material- und Kostenaufwand realisierbar.

Gemäß einer weiteren möglichen Ausgestaltung der Leiteranordnung ist die Arretierungs-Aussparung zumindest in einer Trittfläche einer in Aufstiegsrichtung unterhalb der die Aussparung aufweisenden Stufe angeordneten weiteren Stufe ausgebildet. Eine solche Anordnung ist besonders einfach realisierbar und zeichnet sich durch einen sehr geringen Bauraumbedarf aus.

Gemäß einer weiteren möglichen Ausgestaltung der Leiteranordnung weist die Leiter eine in Richtung der Leiter-Arretierungsstruktur führende Führungsstruktur zur Führung der Haltestangen-Arretierungsstruktur während des Schwenkens auf. Dies ermöglicht eine einfache Bedienung der Haltestange während des Schwenkens und eine einfache und sichere Bewegung der Haltestangen-Arretierungsstruktur in einem mechanischen Eingriff mit der Leiter-Arretierungsstruktur.

Gemäß einer weiteren möglichen Ausgestaltung der Leiteranordnung weist die Haltestange zumindest ein Anschlagelement auf, wobei das Anschlagelement in einem zwischen der Aussparung und der Leiter-Arretierungsstruktur befindlichen Bereich der Haltestange angeordnet ist. Dabei vergrößert das Anschlagelement einen Querschnitt einer Mantelfläche der Haltestange abschnittsweise derart, dass Maße des Querschnitts der Mantelfläche in diesem Abschnitt in zumindest einer Richtung größer sind als ein Querschnitt der Aussparung. Dies ermöglicht einerseits eine verliersichere Anordnung der Haltestange in der Aussparung und andererseits kann ein unbeabsichtigtes Herausziehen der Haltestange durch einen Nutzer vermieden werden, wodurch eine Handhabung der Haltestange bei der Überführung von der Nichtgebrauchsstellung in die Gebrauchsstellung und umgekehrt signifikant vereinfacht ist.

Gemäß einer weiteren möglichen Ausgestaltung der Leiteranordnung ist das Anschlagelement durch einen von der Mantelfläche abragenden Steg, ein abragendes Stiftelement oder eine andere Struktur gebildet. Die andere Struktur ist beispielsweise ein Schraubenkopf einer in die Mantelfläche geschraubten Schraube oder eine an der Mantelfläche befestigte Schraubenmutter.

Gemäß einer weiteren möglichen Ausgestaltung der Leiteranordnung weist die Haltestange zumindest ein Anschlagelement auf, wobei das Anschlagelement in einem zwischen der Aussparung und der Arretierungs-Aussparung der Leiter-Arretierungsstruktur befindlichen Bereich der Haltestange angeordnet ist. Dabei vergrößert das Anschlagelement einen Querschnitt einer Mantelfläche der Haltestange abschnittsweise derart, dass Maße des Querschnitts der Mantelfläche in diesem Abschnitt in zumindest einer Richtung größer sind als ein Querschnitt der Arretierungs-Aussparung. Mittels dieses Anschlagelements wird ein Anschlag der Haltestange in der Arretierungs-Aussparung realisiert, so dass ein Hindurchgleiten der Haltestange entgegen der Aufstiegsrichtung durch die Arretierungs-Aussparung vermieden wird. Dadurch ist die Haltestange in der Gebrauchsstellung sicher in der Arretierungs-Aussparung fixiert.

Gemäß einer weiteren möglichen Ausgestaltung der Leiteranordnung ist das Anschlagelement der Haltestange für die Arretierungs-Aussparung durch einen von der Mantelfläche abragenden Steg, ein abragendes Stiftelement oder eine andere Struktur gebildet. Die andere Struktur ist beispielsweise ein Schraubenkopf einer in die Mantelfläche geschraubten Schraube oder eine an der Mantelfläche befestigte Schraubenmutter.

Gemäß einer weiteren möglichen Ausgestaltung der Leiteranordnung sind das Anschlagelement der Haltestange für die Aussparung und das Anschlagelement der Haltestange für die Arretierungs-Aussparung durch ein gemeinsames Anschlagelement gebildet. Hierdurch können ein Material- und Teilbedarf zur Realisierung der Anschlagelemente verringert werden.

Gemäß einer weiteren möglichen Ausgestaltung der Leiteranordnung weist die Leiter zumindest einen Holm auf, an welcher eine Anzahl von Stufen befestigt ist. Ein solcher Holm ermöglicht eine besonders stabile Ausbildung der Leiter.

Gemäß einer weiteren möglichen Ausgestaltung der Leiteranordnung ist an dem Holm ein Holmelement angeordnet oder ausgebildet, welches die Aussparung aufweist, durch welche die Haltestange geführt ist. Eine solche an dem Holm positionierte Aussparung ermöglicht eine sichere Anordnung der Haltestange an dem Holm und ist mit besonders geringem Material- und Kostenaufwand realisierbar. Dabei kann das Holmelement in Richtung der Anzahl von Stufen weisen, was eine bauraumsparende Anordnung der Haltestange innerhalb der Kontur der Leiter ermöglicht.

Gemäß einer weiteren möglichen Ausgestaltung der Leiteranordnung ist an dem Holm ein Holmelement angeordnet oder ausgebildet, welches die Leiter-Arretierungsstruktur aufweist. Eine solche an dem Holm positionierte Leiter-Arretierungsstruktur ermöglicht eine sichere Arretierung der Haltestange an dem Holm und ist mit besonders geringem Material- und Kostenaufwand realisierbar. Dabei kann das Holmelement in Richtung der Anzahl von Stufen weisen, was eine bauraumsparende Arretierung der Haltestange innerhalb der Kontur der Leiter ermöglicht.

Gemäß einer weiteren möglichen Ausgestaltung der Leiteranordnung ist an der Leiter eine Verstauanordnung zur Verstauung der Haltestange in ihrer Nichtgebrauchsstellung ausgebildet oder angeordnet. Hierdurch wird ein verliersicheres Verstauen der Haltestange in ihrer Nichtgebrauchsstellung an der Leiter oder innerhalb der Kontur der Leiter ermöglicht. Auch wird eine Handhabung der Leiteranordnung und der Haltestange für einen Nutzer vereinfacht.

Gemäß einer weiteren möglichen Ausgestaltung der Leiteranordnung erstreckt sich die Verstauanordnung zumindest in der Nichtgebrauchsstellung der Leiter zumindest im Wesentlichen senkrecht zu einem freien Querschnitt der Aussparung, durch welche die Haltestange geführt ist. Dies ermöglicht, dass die Haltestange entlang ihrer Haltestangen-Längsrichtung durch die Aussparung in die Verstauanordnung führbar bzw. verschiebbar ist.

Gemäß einer weiteren möglichen Ausgestaltung der Leiteranordnung weist diese eine an dem Fahrzeug befestigbare oder befestigte Leiter-Führungsstruktur auf. Die Leiter ist in oder an der Leiter-Führungsstruktur verschiebbar gelagert und von ihrer Nichtgebrauchsstellung über die Leiter-Führungsstruktur in eine Leiter-Zwischenstellung ausziehbar. Von der Zwischenstellung ist die Leiter durch in Aufstiegsrichtung nach unten gerichtetes Abklappen in die Gebrauchsstellung überführbar. Eine solche Ausbildung und Anordnung der Leiter ermöglicht einerseits eine sichere Verstauung bzw. Aufbewahrung derselben in ihrer Nichtgebrauchsstellung und andererseits eine einfache Überführung derselben in ihre Gebrauchsstellung. Dabei ist die Leiter verliersicher angeordnet und in besonders einfacher Weise mit geringem Kraftaufwand handhabbar.

Das Abklappen erfolgt beispielsweise durch ein Schwenken um eine Schwenkachse, wobei die Schwenkachse mittels eines Schwenklagers gebildet ist, welches im Bereich eines einem Fahrzeugaufbau zugewandten Endes der Ausziehleiter zwischen diesem und einem Ende der Leiter-Führungsstruktur, wenn die Ausziehleiter eine maximale Auszugsstellung aus der Leiter-Führungsstruktur erreicht hat, ausgebildet ist. Hierdurch wird die Handhabung der Leiter weiter vereinfacht und das Schwenklager bildet eine zusätzliche Sicherung eines oberen Endes der Leiter in deren Gebrauchsstellung.

Ein erfindungsgemäßer Fahrzeugaufbau weist einen Ladeboden und zumindest eine vorgenannte Leiteranordnung auf. Die Leiteranordnung ermöglicht in der Gebrauchsstellung der Leiter und der Gebrauchsstellung der Haltestange für einen Nutzer eines Fahrzeugs einen sicheren Aufstieg auf den Ladeboden und einen sicheren Abstieg von dem Ladeboden. Dabei sind die Leiter und die Haltestange besonders einfach handhabbar und zeichnen sich durch einen besonders einfachen Aufbau mit geringer Teileanzahl auf.

**In** einer möglichen Ausgestaltung des Fahrzeugaufbaus ist die zumindest eine Leiter eine Ausziehleiter, welche in ihrer Nichtgebrauchsstellung in einer unterhalb des Ladebodens befindlichen Aufbewahrungsstellung angeordnet ist, über eine am Fahrzeugaufbau angeordnete Leiter-Führungsstruktur ausziehbar ist und durch Ausziehen aus der Aufbewahrungsstellung über eine Grundfläche des Ladebodens hinaus und Abklappen in die Gebrauchsstellung überführbar ist. Eine solche Ausbildung und Anordnung der Leiter ermöglicht einerseits eine sichere Verstauung derselben in der Aufbewahrungsstellung und andererseits eine einfache Überführung derselben in die Gebrauchsstellung. Dabei ist die Leiter verliersicher angeordnet und in besonders einfacher Weise mit geringem Kraftaufwand handhabbar.

In einer weiteren möglichen Ausgestaltung des Fahrzeugaufbaus ist die Ausziehleiter durch Schwenken um eine Schwenkachse in die Gebrauchsstellung abklappbar, wobei die Schwenkachse mittels eines Schwenklagers gebildet ist, welches im Bereich eines dem Fahrzeugaufbau zugewandten Endes der Ausziehleiter zwischen diesem und einem Ende der Leiter-Führungsstruktur, wenn die Ausziehleiter eine maximale Auszugsstellung aus der Leiter-Führungsstruktur erreicht hat, ausgebildet ist. Hierdurch wird die Handhabung der Leiter weiter vereinfacht und das Schwenklager bildet eine zusätzliche Sicherung eines oberen Endes der Leiter in deren Gebrauchsstellung.

In einer weiteren möglichen Ausgestaltung des Fahrzeugaufbaus ist der Haltegriff in der Nichtgebrauchsstellung gemeinsam mit der Leiter unterhalb des Ladebodens angeordnet, gemeinsam mit der Leiter über die am Fahrzeugaufbau angeordnete Führungsstruktur ausziehbar und durch Ausziehen über die Grundfläche des Ladebodens hinaus und durch Schwenken nach oben in der Gebrauchsstellung arretierbar. Eine solche Anordnung und Ausbildung der Haltestange ermöglicht einerseits eine sichere Verstauung desselben in der Nichtgebrauchsstellung und andererseits eine einfache Überführung desselben in die Gebrauchsstellung. Dabei ist der Haltegriff verliersicher angeordnet und in besonders einfacher Weise handhabbar.

Das erfindungsgemäße Fahrzeug weist einen vorgenannten Fahrzeugaufbau auf. Beispielsweise ist das Fahrzeug ein Anhänger, ein Auflieger oder ein motorisch betriebenes Fahrzeug.

Ausführungsbeispiele der Erfindung werden im Folgenden anhand von Zeichnungen näher erläutert.

Darin zeigen:
- Figur 1: schematisch eine perspektivische Ansicht einer Leiteranordnung in einer Nichtgebrauchsstellung,
- Figur 2: schematisch eine Draufsicht der Leiteranordnung gemäß Figur 1,
- Figur 3: schematisch eine perspektivische Ansicht der Leiteranordnung gemäß Figur 1 in einer Gebrauchsstellung,
- Figur 4: schematisch eine Frontansicht der Leiteranordnung gemäß Figur 3,
- Figur 5: schematisch eine perspektivische Ansicht eines vergrößerten Ausschnitts der Leiteranordnung gemäß Figur 3 und
- Figur 6: schematisch eine perspektivische Ansicht eines Fahrzeugs mit einer Leiteranordnung gemäß Figur 3.

Einander entsprechende Teile sind in allen Figuren mit den gleichen Bezugszeichen versehen.

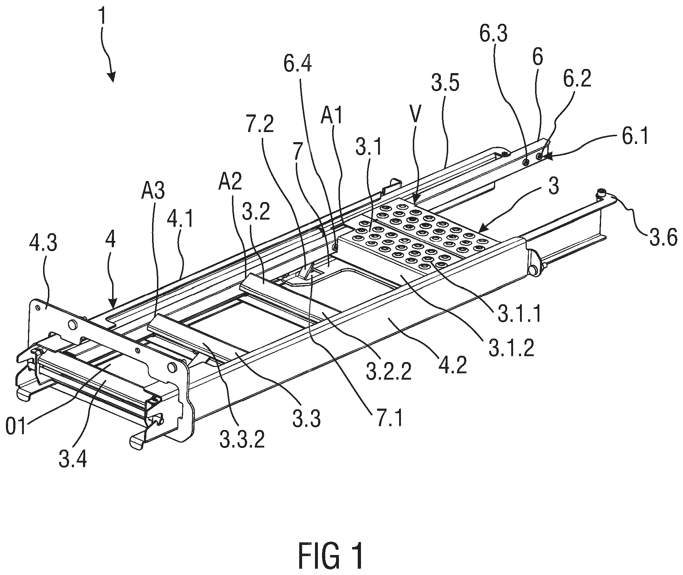

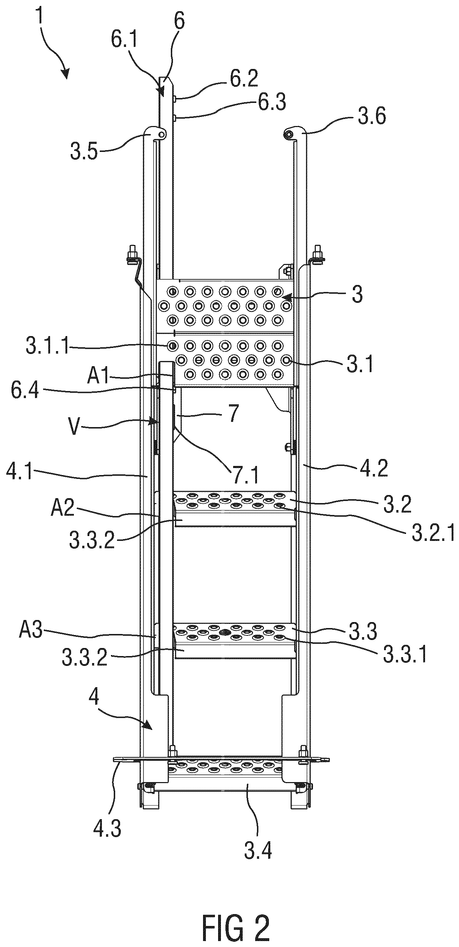

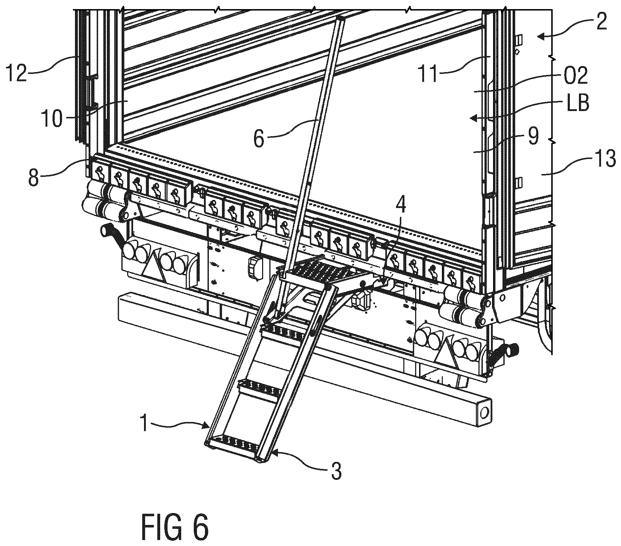

Die **Figuren 1** **und** **2** zeigen eine Leiteranordnung 1 in einer Nichtgebrauchsstellung für ein in Figur 6 näher dargestelltes Fahrzeug 2 in einer perspektivischen Ansicht und einer Draufsicht.

Die Leiteranordnung 1 weist eine Leiter 3 mit mehreren Stufen 3.1 bis 3.4 und zwei parallel angeordneten Holmen 3.5, 3.6 auf, an welchen die Stufen 3.1 bis 3.4 befestigt sind. Die Leiter 3 ist als Ausziehleiter ausgebildet.

Zur Realisierung einer Ausziehfunktion weist die Leiteranordnung 1 eine an dem Fahrzeug befestigbare Leiter-Führungsstruktur 4 mit zwei Führungsschienen 4.1, 4.2 auf, in welcher die Leiter 3, insbesondere die Holme 3.5, 3.6 der Leiter 3, verschiebbar gelagert sind. Die Leiter-Führungsstruktur 4 weist weiterhin ein Führungselement 4.3 auf, welches an einem Fahrzeugaufbau 8 (dargestellt in Figur 6) befestigbar ist. In dem Führungselement 4.3 ist eine Öffnung O1 ausgebildet, durch welche die Leiter 3 bei ihrer Verschiebung führbar ist.

Weiterhin weist die Leiteranordnung 1 eine Haltestange 6 mit im Bereich einer Haltestangen-Arretierungsstruktur 6.1 angeordneten Anschlagelementen 6.2, 6.3 auf, wobei sich die Haltestange 6 in der Nichtgebrauchsstellung der Leiter 3 ebenfalls in einer Nichtgebrauchsstellung befindet.

Ferner weist die Leiteranordnung 1 eine Leiter-Arretierungsstruktur 7 mit einer Arretierungs-Aussparung 7.1 und einer Stützstruktur 7.2 auf.

In der dargestellten Nichtgebrauchsstellung der Leiter 3 und der Haltestange 6 ist die Haltestange 6 innerhalb einer Kontur der Leiter 3 zwischen den Holmen 3.5, 3.6 in einer Verstauanordnung V angeordnet und in Haltestangen-Längsrichtung durch eine Aussparung A1 der Stufe 3.1 geführt, so dass die Haltestange 6 zumindest im Wesentlichen parallel zu den Holmen 3.5, 3.6 verläuft. Die Aussparung A1 erstreckt sich dabei in einem Abschnitt einer Trittfläche 3.1.1 der Stufe 3.1 und zumindest einem angrenzenden Abschnitt einer stirnseitigen Fläche 3.1.2 der Stufe 3.1. Weiterhin weisen auch die Stufen 3.2, 3.3 Aussparungen A2, A3 auf, die sich jeweils in einem Abschnitt einer Trittfläche 3.2.1, 3.3.1 und zumindest einem angrenzenden Abschnitt einer stirnseitigen Fläche 3.2.2, 3.3.2 der Stufen 3.2, 3.3 erstrecken. In der Nichtgebrauchsstellung der Leiter 3 und der Haltestange 6 ist die Haltestange 6 in den Aussparungen A2, A3 angeordnet.

Zur Überführung der Leiter 3 aus der dargestellten Nichtgebrauchsstellung in eine Gebrauchsstellung, ist diese zunächst durch die Öffnung O1 von ihrer Nichtgebrauchsstellung über die Leiter-Führungsstruktur 4 in eine Leiter-Zwischenstellung ausziehbar und anschließend von der Zwischenstellung durch in Aufstiegsrichtung nach unten gerichtetes Abklappen in die Gebrauchsstellung überführbar.

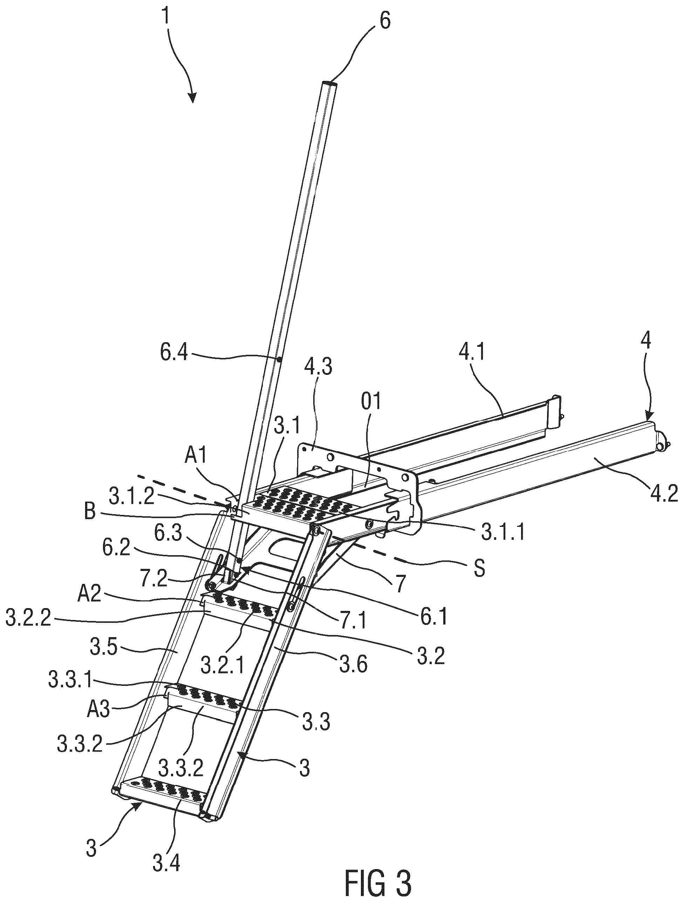

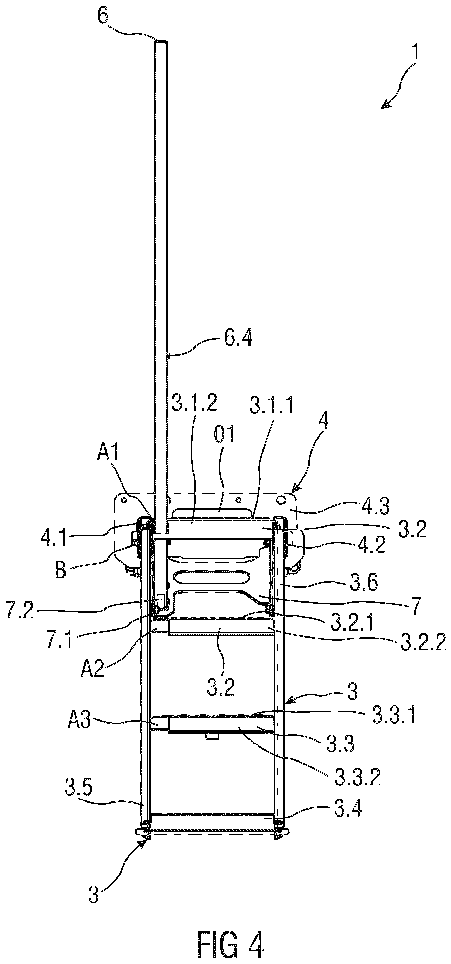

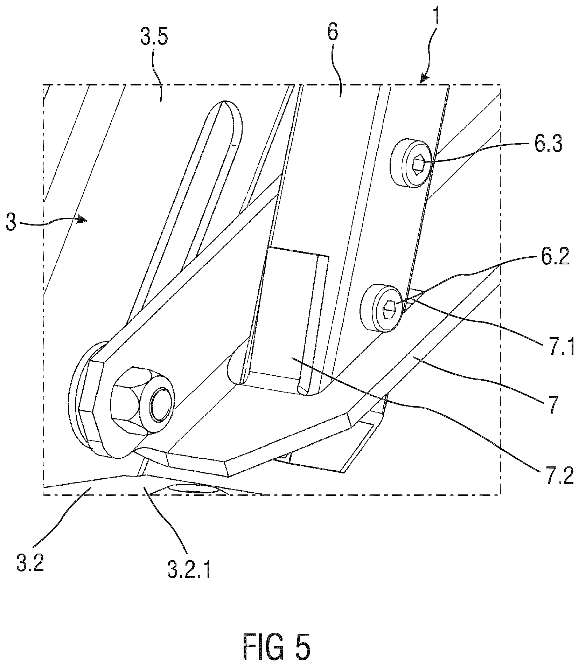

Die Figuren 3 und 4 zeigen die Leiteranordnung 1 in dieser abgeklappten Gebrauchsstellung in einer perspektivischen Ansicht und einer Frontansicht. Figur 5 zeigt eine perspektivische Ansicht eines vergrößerten Ausschnitts der Leiteranordnung gemäß Figur 3.

Das Abklappen erfolgt durch Schwenken der Holme 3.5, 3.6 um eine Schwenkachse S, wobei die Schwenkachse S mittels Schwenklagern gebildet ist, welche im Bereich eines jeweiligen der Leiter-Führungsstruktur 4 zugewandten Endes der Holme 3.5, 3.6 zwischen diesen und einem Ende der Leiter-Führungsstruktur 4, wenn die Leiter 3 eine maximale Auszugsstellung aus der Leiter-Führungsstruktur 4 erreicht hat, ausgebildet sind.

Weiterhin ist in den Figuren 3 und 4 auch die Haltestange 6 in ihrer Gebrauchsstellung dargestellt. Zum Erreichen dieser Gebrauchsstellung wird die Haltestange 6 zunächst gemeinsam mit der Leiter 3 aus der Leiter-Führungsstruktur 4 herausgezogen. Auch nach dem Abklappen der Leiter 3 verläuft die Haltestange 6 zumindest im Wesentlichen in der gleichen Richtung wie die Führungsschienen 4.1, 4.2.

Zu einer Überführung der Haltestange 6 in ihre Gebrauchsstellung wird diese zunächst weiter durch die Aussparung A1 herausgezogen. Dabei wird mittels des Anschlagelements 6.3 der Haltestange 6 vermieden, dass diese aus der Aussparung A1 herausgezogen werden kann. Hierzu vergrößert das Anschlagelement 6.3 einen Querschnitt einer Mantelfläche der Haltestange 6 abschnittsweise derart, dass Maße des Querschnitts der Mantelfläche in diesem Abschnitt B in zumindest einer Richtung größer sind als ein Querschnitt der Aussparung A1 sind. Beispielsweise ist das Anschlagelement 6.3 durch einen Schraubenkopf einer in die Mantelfläche geschraubte Schraube gebildet.

Nach einem Herausbewegen der Haltestange 6 bis zum Erreichen des Anschlags wird diese in der Aussparung A1 um eine quer zu einer Aufstiegsrichtung der Leiter 3 verlaufende Querachse der Leiter 3 in eine Zwischenstellung geschwenkt. Dabei bildet ein die Aussparung A1 begrenzender Abschnitt B ein Anschlagelement und ein Gegenlager für die Haltestange 6 und verhindert, dass diese aus der Aussparung A1 herausgeführt werden kann.

Ausgehend von dieser Zwischenstellung wird die Haltestange 6 mit einem arretierungsseitigen Ende nach unten in die Arretierungs-Aussparung 7.1 der Leiter-Arretierungsstruktur 7 eingeschoben und mittels der Stützstruktur 7.2 gestützt. Eine weitere Abstützung und ein Schutz vor einem Hindurchgleiten der Haltestange 6 durch die Arretierungs-Aussparung 7.1 wird durch das Anschlagelements 6.2 der Haltestange 6 realisiert. Hierzu vergrößert das Anschlagelement 6.2 den Querschnitt der Mantelfläche der Haltestange 6 abschnittsweise derart, dass Maße des Querschnitts der Mantelfläche in diesem Abschnitt in zumindest einer Richtung größer sind als ein Querschnitt der Arretierungs-Aussparung 7.1. Beispielsweise ist das Anschlagelement 6.2 durch einen Schraubenkopf einer in die Mantelfläche geschraubten Schraube gebildet.

Die Leiter-Arretierungsstruktur 7 ist dabei einerseits oberhalb der Stufe 3.2 gelenkig in Langlöchern an den Holmen 3.5, 3.6 und hinter der Stufe 3.1 gelenkig angeordnet und schwenkt bei Abklappen der Holme 3.5, 3.6 derart nach unten, dass sich die Arretierungs-Aussparung 7.1 oberhalb der Stufe 3.2 befindet.

Um eine Führung der Haltestange 6 in die Arretierungs-Aussparung 7.1 zu erleichtern, kann in nicht näher dargestellter Weise auf einer der oberen Stufe 3.1 zugewandten Seite der Leiter-Arretierungsstruktur 7 eine in Richtung der Arretierungs-Aussparung 7.1 führende Führungsstruktur zur Führung der Haltestangen-Arretierungsstruktur 6.1 während des Schwenkens vorgesehen sein.

In der dargestellten Gebrauchsstellung ist die Haltestange 6 in dem in die Leiter-Arretierungsstruktur 7 eingeschobenen Zustand arretiert und ein dem arretierungsseitigen Ende gegenüberliegendes freies Ende der Haltestange 6 ist in Aufstiegsrichtung oberhalb der Leiter 3 angeordnet.

Zu einer Überführung der Haltestange 6 aus der Gebrauchsstellung in die Nichtgebrauchsstellung wird diese nach oben aus der Arretierungs-Aussparung 7.1 herausgezogen und in der Aussparung A1 derart zurückgeklappt, dass die Haltestange 6 teilweise durch die Aussparung A1 in Richtung der Leiter-Führungsstruktur 4 zurückbewegt werden kann. Eine Bewegung der Haltestange 6 in diese Richtung wird durch ein weiteres Anschlagelement 6.4 begrenzt. Dieses Anschlagelement 6.4 ist insbesondere analog zum Anschlagelement 6.3 ausgebildet.

Ist dieser Anschlag durch Kontakt des Anschlagelements 6.4 mit der die Aussparung A1 begrenzenden stirnseitigen Fläche 3.1.2 der Stufe 3.1 erreicht, wird die Leiter 3 um die Schwenkachse S nach oben geklappt und durch die Öffnung in die Leiter-Führungsstruktur 4 eingeschoben.

In Figur 6 ist ein Fahrzeug 2 mit einer in einer Gebrauchsstellung befindlichen Leiteranordnung 1 gemäß den Figuren 4 und 5 dargestellt.

Das Fahrzeug 2 umfasst einen Fahrzeugaufbau 8 mit einem so genannten Kofferaufbau mit einem Ladebereich LB, welcher an einer Unterseite von einem Ladeboden 9, seitlich von zwei festen Seitenwänden 10, 11, an einer Oberseite von einem nicht näher dargestellten festen Dach, an einem Frontbereich von einer nicht näher dargestellten Vorderwand und in einem geschlossenen Zustand von zwei im Heckbereich angeordneten Fahrzeugtüren 12, 13 begrenzt ist. Die Fahrzeugtüren 12, 13 sind im geöffneten Zustand dargestellt . Im geschlossenen Zustand verschließen die Fahrzeugtüren 12, 13 eine Öffnung O2 des Fahrzeugaufbaus 8, über welche ein Zutritt, eine Beladung und eine Entladung des Fahrzeugaufbaus 8 erfolgen können.

Dabei ist das Fahrzeug 2 als Anhänger, Auflieger oder motorisch betriebenes Fahrzeug 2, umfassend den Fahrzeugaufbau 8, ausgebildet. Der Fahrzeugaufbau 8 kann alternativ oder zusätzlich auch einen Planenaufbau und/oder einen Kühlaufbau umfassen.

Weiterhin kann die Öffnung O2 an einer anderen Position des Fahrzeugaufbaus 8, beispielsweise in einer der Seitenwände 10, 11 oder der Vorderwand, ausgebildet sein. Auch kann der Fahrzeugaufbau 8 mehrere solcher Öffnungen O2 umfassen, welche beispielsweise mittels zumindest einer Fahrzeugtür 12, 13 verschließbar sind. In nicht näher dargestellten Ausführungsbeispielen ist die zumindest eine Öffnung O2 mit zumindest einer Plane und/oder einem Rolltor des Fahrzeugaufbaus 8 verschließbar.

Um einem Nutzer des Fahrzeugs 2 einen Einstieg in den Ladebereich LB, das heißt auf den Ladeboden 9, zu ermöglichen, umfasst der Fahrzeugaufbau 8 eine Leiteranordnung 1 gemäß den Figuren 1 bis 5. Dabei ist die Leiter 3 in der in den Figuren 1 und 2 dargestellten Nichtgebrauchsstellung in einer unterhalb des Ladebodens 9 befindlichen Aufbewahrungsstellung angeordnet und über die am Fahrzeugaufbau 8 angeordnete Leiter-Führungsstruktur 4 ausziehbar.

Durch Ausziehen der Leiter 3 aus der Aufbewahrungsstellung über eine Grundfläche des Ladebodens 9 hinaus und Abklappen ist die Leiter 3 in eine Gebrauchsstellung überführbar, in welcher diese einen Aufstieg von einem Untergrund, auf welchem sich das Fahrzeug 2 befindet, auf den Ladeboden 9 ermöglicht.

In der dargestellten Gebrauchsstellung der Leiter 3 ermöglicht diese einen Zugang zu dem Ladebereich LB, auch wenn dieser in Randbereichen des Ladebodens 9 bereits mit Ladung befüllt ist. Jedoch ist in dieser Position für einen Nutzer ein Greifen an eine als Haltemöglichkeit geeignete Struktur des Fahrzeugaufbaus 8 aufgrund eines zu großen Abstands nicht möglich. Zur Wahrung der Übersichtlichkeit sind die Komponenten der Leiter 3 nicht mit Bezugszeichen versehen. Die dargestellte Gebrauchsstellung entspricht dabei der in Figur 3 dargestellten Gebrauchsstellung, in welcher die Komponenten mit den zugehörigen Bezugszeichen versehen sind.

Um dem Nutzer dennoch für seinen Aufstieg und Abstieg über die Leiter 3 eine sichere Haltemöglichkeit zu bieten, umfasst die Leiteranordnung 1 die Haltestange 6, welche gemäß der Beschreibung zu den Figuren 1 bis 5 aus seiner Nichtgebrauchsstellung in seine Gebrauchsstellung überführbar und in dieser arretierbar ist. Zur Wahrung der Übersichtlichkeit sind die Komponenten der Haltestange 6 nicht mit Bezugszeichen versehen. Diese entsprechen ebenfalls den in Figur 3 dargestellten Bezugszeichen.

### BEZUGSZEICHENLISTE

- 1: Leiteranordnung
- 2: Fahrzeug
- 3: Leiter
- 3.1: Stufe
- 3.1.1: Trittfläche
- 3.1.2: stirnseitige Fläche
- 3.2: Stufe
- 3.2.1: Trittfläche
- 3.2.2: stirnseitige Fläche
- 3.3: Stufe
- 3.3.1: Trittfläche
- 3.3.2: stirnseitige Fläche
- 3.4: Stufe
- 3.5, 3.6: Holm
- 4: Leiter-Führungsstruktur
- 4.1, 4.2: Führungsschiene
- 4.3: Führungselement
- 6: Haltestange
- 6.1: Haltestangen-Arretierungsstruktur
- 6.2 bis 6.4: Anschlagelement
- 7: Leiter-Arretierungsstruktur
- 7.1: Arretierungs-Aussparung
- 7.2: Stützstruktur
- 8: Fahrzeugaufbau
- 9: Ladeboden
- 10, 11: Seitenwand
- 12, 13: Fahrzeugtür
- A1 bis A3: Aussparung
- B: Abschnitt
- LB: Ladebereich
- O1, O2: Öffnung
- S: Schwenkachse
- V: Verstauanordnung

## Patentansprüche

1. Leiteranordnung (1) für ein Fahrzeug (2), aufweisend
- zumindest eine Leiter (3), welche aus einer Nichtgebrauchsstellung in eine Gebrauchsstellung überführbar ist, in welcher diese einen Aufstieg von einem Untergrund, auf welchem sich das Fahrzeug (2) befindet, auf einen Ladeboden (9) des Fahrzeugs (2) ermöglicht,
- zumindest eine Haltestange (6), welche aus einer Nichtgebrauchsstellung in eine Gebrauchsstellung überführbar ist und eine Haltestangen-Arretierungsstruktur (6.1) aufweist,
wobei
- die Leiter (3) eine Aussparung (A1) aufweist, durch welche die Haltestange (6) geführt ist,
- die Haltestange (6) in der Aussparung (A1) in Haltestangen-Längsrichtung verschiebbar angeordnet ist,
- die Haltestange (6) zur Überführung von der Nichtgebrauchsstellung in die Gebrauchsstellung um eine quer zu einer Aufstiegsrichtung der Leiter (3) verlaufende Querachse der Leiter (3) in der Aussparung (A1) in eine Zwischenstellung schwenkbar ist,
- die Leiter (3) eine in Aufstiegsrichtung unterhalb der Aussparung (A1) angeordnete, mit der Haltestangen-Arretierungsstruktur (6.1) korrespondierende Leiter-Arretierungsstruktur (7) aufweist,
- die Haltestange (6) ausgehend von der Zwischenstellung mit einem arretierungsseitigen Ende auf die Leiter-Arretierungsstruktur (7) aufschiebbar oder in die Leiter-Arretierungsstruktur (7) einschiebbar ist und
- die Haltestange (6) in einem auf die Leiter-Arretierungsstruktur (7) aufgeschobenen oder in die Leiter-Arretierungsstruktur (7) eingeschobenen Zustand in der Gebrauchsstellung arretiert ist und ein dem arretierungsseitigen Ende gegenüberliegendes freies Ende der Haltestange (6) in Aufstiegsrichtung oberhalb der Leiter (3) angeordnet ist.

2. Leiteranordnung (1) nach Anspruch 1,
**dadurch gekennzeichnet, dass**
- die Leiter (3) zumindest eine Stufe (3.1 bis 3.4) aufweist,
- die Stufe (3.1 bis 3.4) eine Trittfläche (3.1.1, 3.2.1, 3.3.1) und eine stirnseitige Fläche (3.1.2, 3.2.2, 3.3.2) aufweist und
- die Aussparung (A1) sich in zumindest einem Abschnitt der Trittfläche (3.1.1, 3.2.1, 3.3.1) und zumindest einem angrenzenden Abschnitt der stirnseitigen Fläche (3.1.2, 3.2.2, 3.3.2) erstreckt.

3. Leiteranordnung (1) nach Anspruch 1 oder 2,
**dadurch gekennzeichnet, dass** die Leiter-Arretierungsstruktur (7) eine Arretierungs-Aussparung (7.1) zur Aufnahme der Haltestangen-Arretierungsstruktur (6.1) aufweist.

4. Leiteranordnung (1) nach Anspruch 3,
**dadurch gekennzeichnet, dass** die Arretierungs-Aussparung (7.1) zumindest in einer Trittfläche (3.1.1, 3.2.1, 3.3.1) einer in Aufstiegsrichtung unterhalb der die Aussparung (A1) aufweisenden Stufe (3.1 bis 3.4) angeordneten weiteren Stufe (3.1 bis 3.4) ausgebildet ist.

5. Leiteranordnung (1) nach einem der vorhergehenden Ansprüche,
**dadurch gekennzeichnet, dass** die Leiter (3) eine in Richtung der Leiter-Arretierungsstruktur (7) führende Führungsstruktur zur Führung der Haltestangen-Arretierungsstruktur (6.1) während des Schwenkens aufweist.

6. Leiteranordnung (1) nach einem der vorhergehenden Ansprüche,
**dadurch gekennzeichnet, dass**
- die Haltestange (6) zumindest ein Anschlagelement (6.3) aufweist,
- das Anschlagelement (6.3) in einem zwischen der Aussparung (A1) und der Leiter-Arretierungsstruktur (7) befindlichen Bereich der Haltestange (6) angeordnet ist und
- das Anschlagelement (6.3) einen Querschnitt einer Mantelfläche der Haltestange (6) abschnittsweise derart vergrößert, dass Maße des Querschnitts der Mantelfläche in diesem Abschnitt in zumindest einer Richtung größer sind als ein Querschnitt der Aussparung (A1).

7. Leiteranordnung (1) nach einem der Ansprüche 3 bis 6,
**dadurch gekennzeichnet, dass**
- die Haltestange (6) zumindest ein Anschlagelement (6.2) aufweist,
- das Anschlagelement (6.2) in einem zwischen der Aussparung (A1) und der Arretierungs-Aussparung (7.1) der Leiter-Arretierungsstruktur (7) befindlichen Bereich der Haltestange (6) angeordnet ist und
- das Anschlagelement (6.2) einen Querschnitt einer Mantelfläche der Haltestange (6) abschnittsweise derart vergrößert, dass Maße des Querschnitts der Mantelfläche in diesem Abschnitt in zumindest einer Richtung größer sind als ein Querschnitt der Arretierungs-Aussparung (7.1).

8. Leiteranordnung (1) nach einem der vorhergehenden Ansprüche,
**dadurch gekennzeichnet, dass** die Leiter (3) zumindest einen Holm (3.5, 3.6) aufweist, an welcher eine Anzahl von Stufen (3.1 bis 3.4) befestigt ist, wobei
- an dem Holm (3.5, 3.6) ein Holmelement angeordnet oder ausgebildet ist, welches die Aussparung (A1) aufweist, durch welche die Haltestange (6) geführt ist, und/oder
- an dem Holm (3.5, 3.6) ein Holmelement angeordnet oder ausgebildet ist, welches die Leiter-Arretierungsstruktur (7) aufweist.

9. Leiteranordnung (1) nach einem der vorhergehenden Ansprüche,
**dadurch gekennzeichnet, dass** an der Leiter (3) eine Verstauanordnung (V) zur Verstauung der Haltestange (6) in ihrer Nichtgebrauchsstellung ausgebildet oder angeordnet ist.

10. Leiteranordnung (1) nach einem der vorhergehenden Ansprüche,
**dadurch gekennzeichnet, dass** die Verstauanordnung (V) sich zumindest in der Nichtgebrauchsstellung der Leiter (3) zumindest im Wesentlichen senkrecht zu einem freien Querschnitt der Aussparung (A1) erstreckt, durch welche die Haltestange (6) geführt ist.

11. Leiteranordnung (1) nach Anspruch 9 oder 10,
**dadurch gekennzeichnet, dass** die Verstauanordnung (V) innerhalb einer Kontur der Leiter (3) positioniert ist.

12. Leiteranordnung (1) nach einem der vorhergehenden Ansprüche,
**dadurch gekennzeichnet, dass**
- eine an dem Fahrzeug (2) befestigbare oder befestigte Leiter-Führungsstruktur (4) vorgesehen ist,
- die Leiter (3) in oder an der Leiter-Führungsstruktur (4) verschiebbar gelagert ist,
- die Leiter (3) von ihrer Nichtgebrauchsstellung über die Leiter-Führungsstruktur (4) in eine Leiter-Zwischenstellung ausziehbar ist und
- die Leiter (3) von der Zwischenstellung durch in Aufstiegsrichtung nach unten gerichtetes Abklappen in die Gebrauchsstellung überführbar ist.

13. Fahrzeugaufbau (8), aufweisend einen Ladeboden (9) und zumindest eine Leiteranordnung (1) nach einem der vorhergehenden Ansprüche.

14. Fahrzeugaufbau (8) nach Anspruch 13,
**dadurch gekennzeichnet, dass**
die Leiter (3) der zumindest einen Leiteranordnung (1) eine Ausziehleiter ist, welche
- in ihrer Nichtgebrauchsstellung in einer unterhalb des Ladebodens (9) befindlichen Aufbewahrungsstellung angeordnet ist,
- über die am Fahrzeugaufbau (8) angeordnete Leiter-Führungsstruktur (4) ausziehbar ist und
- durch Ausziehen aus der Aufbewahrungsstellung über eine Grundfläche des Ladebodens (9) hinaus und das Abklappen in die Gebrauchsstellung überführbar ist, und
die Haltestange (6) gemeinsam mit der Leiter (3) ausziehbar ist und in der Gebrauchsstellung der Leiter (3) von ihrer Nichtgebrauchsstellung in ihre Gebrauchsstellung überführbar ist.

15. Fahrzeug (2), aufweisend einen Fahrzeugaufbau (8) nach Anspruch 13 oder 14.

## Claims

1. Ladder assembly (1) for a vehicle (2), having
- at least one ladder (3) which is transferable from a non-use position to a use position in which said ladder enables an ascent from a hard surface on which the vehicle (2) is located to a loading floor (9) of the vehicle (2),
- at least one holding bar (6), which is transferable from a non-use position to a use position and has a holding bar locking structure (6.1),
wherein
- the ladder (3) has a clearance (A1) through which the holding bar (6) is guided,
- the holding bar (6) is disposed in the clearance (A1) so as to be displaceable in the holding bar longitudinal direction,
- for transferring the holding bar (6) from the non-use position to the use position the latter in the clearance (A1) is pivotable about a transverse axis of the ladder (3), which runs transversely to an ascent direction of the ladder (3), to an intermediate position,
- the ladder (3) has a ladder locking structure (7) which communicates with the holding bar locking structure (6.1) and is disposed below the clearance (A1) in the ascent direction,
- proceeding from the intermediate position, the holding bar (6) by way of a locking-proximal end is able to be pushed onto the ladder locking structure (7) or into the ladder locking structure (7) and
- the holding bar (6), in a state pushed onto the ladder locking structure (7) or pushed into the ladder locking structure (7), is locked in the use position, and a free end of the holding bar (6), which lies opposite the locking-proximal end, is disposed above the ladder (3) in the ascent direction.

2. Ladder assembly (1) according to Claim 1, **characterized in that**
- the ladder (3) has at least one step (3.1 to 3.4),
- the step (3.1 to 3.4) has a tread (3.1.1, 3.2.1, 3.3.1) and a frontal surface (3.1.2, 3.2.2, 3.3.2), and
- the clearance (A1) extends in at least one portion of the tread (3.1.1, 3.2.1, 3.3.1) and at least one adjacent portion of the frontal surface (3.1.2, 3.2.2, 3.3.2).

3. Ladder assembly (1) according to Claim 1 or 2,
**characterized in that** the ladder locking structure (7) has a locking clearance (7.1) for receiving the holding bar locking structure (6.1).

4. Ladder assembly (1) according to Claim 3,
**characterized in that** the locking clearance (7.1) is formed at least in a tread (3.1.1, 3.2.1, 3.3.1) of a further step (3.1 to 3.4) that in the ascent direction is disposed below the step (3.1 to 3.4) having the clearance (A1).

5. Ladder assembly (1) according to one of the preceding claims,
**characterized in that** the ladder (3) has a guide structure leading in the direction of the ladder locking structure (7) for guiding the holding bar locking structure (6.1) during pivoting.

6. Ladder assembly (1) according to one of the preceding claims, **characterized in that**
- the holding bar (6) has at least one stop element (6.3),
- the stop element (6.3) is disposed in a region of the holding bar (6) located between the clearance (A1) and the ladder locking structure (7), and
- the stop element (6.3) enlarges portions of a cross section of a shell face of the holding bar (6) in such a manner that dimensions of the cross section of the shell face in this portion are larger in at least one direction than a cross section of the clearance (A1).

7. Ladder assembly (1) according to one of Claims 3 to 6,
**characterized in that**
- the holding bar (6) has at least one stop element (6.2),
- the stop element (6.2) is disposed in a region of the holding bar (6) located between the clearance (A1) and the locking clearance (7.1) of the ladder locking structure (7), and
- the stop element (6.2) enlarges portions of a cross section of a shell face of the holding bar (6) in such a manner that dimensions of the cross section of the shell face in this portion are larger in at least one direction than a cross section of the locking clearance (7.1).

8. Ladder assembly (1) according to one of the preceding claims,
**characterized in that** the ladder (3) has at least one spar (3.5, 3.6) to which a number of steps (3.1 to 3.4) are fastened, wherein
- disposed or formed on the spar (3.5, 3.6) is a spar element which has the clearance (A1) through which the holding bar (6) leads, and/or
- disposed or formed on the spar (3.5, 3.6) is a spar element which has the ladder locking structure (7).

9. Ladder assembly (1) according to one of the preceding claims,
**characterized in that** formed or disposed on the ladder (3) is a stowage assembly (V) for stowing the holding bar (6) in its non-use position.

10. Ladder assembly (1) according to one of the preceding claims,
**characterized in that** the stowage assembly (V) at least in the non-use position of the ladder (3) extends at least substantially perpendicularly to a free cross section of the clearance (A1) through which the holding bar (6) leads.

11. Ladder assembly (1) according to Claim 9 or 10,
**characterized in that** the stowage assembly (V) is positioned within a contour of the ladder (3).

12. Ladder assembly (1) according to one of the preceding claims,
**characterized in that**
- a ladder guide structure (4) which is fastenable or fastened to the vehicle (2) is provided,
- the ladder (3) is mounted so as to be displaceable in or on the ladder guide structure (4),
- the ladder (3) is extendable from its non-use position to a ladder intermediate position by way of the ladder guide structure (4), and
- the ladder (3) is transferable from the intermediate position to the use position by folding downward in the ascent direction.

13. Vehicle superstructure (8), having a loading floor (9) and at least one ladder assembly (1) according to one of the preceding claims.

14. Vehicle superstructure (8) according to Claim 13,
**characterized in that**
the ladder (3) of the at least one ladder assembly (1) is an extension ladder which
- in its non-use position is disposed in a stowage position located below the loading floor (9),
- is extendable by way of the ladder guide structure (4) disposed on the vehicle superstructure (8), and
- by being extended from the stowage position beyond a base area of the loading floor (9) and by folding downward is transferable to the use position, and
the holding bar (6) is extendable conjointly with the ladder (3) and, in the use position of the ladder (3), is transferable from its non-use position to its use position.

15. Vehicle (2), having a vehicle superstructure (8) according to Claim 13 or 14.

## Revendications

1. Agencement d'échelle (1) pour un véhicule (2), présentant
- au moins une échelle (3), qui peut être transféré d'une position de non-utilisation à une position d'utilisation, dans laquelle celui-ci permet de monter d'un sol sur lequel se trouve le véhicule (2) sur un plancher de chargement (9) du véhicule (2),
- au moins une tige de maintien (6), qui peut être transférée d'une position de non-utilisation à une position d'utilisation et qui présente une structure d'arrêt de tige de maintien (6.1),
où
- l'échelle (3) présente une découpe (A1) à travers laquelle la tige de maintien (6) est guidée,
- la tige de maintien (6) est disposée dans l'évidement (A1) de manière à pouvoir se déplacer dans la direction longitudinale de la tige de maintien,
- la tige de maintien (6), pour le passage de la position de non-utilisation à la position d'utilisation, peut pivoter autour d'un axe transversal de l'échelle (3) dans la découpe (A1), s'étendant transversalement par rapport à une direction de montée de l'échelle (3), dans une position intermédiaire,
- l'échelle (3) présente une structure d'arrêt d'échelle (7) qui est disposée sous la découpe (A1) dans la direction de montée et qui correspond à la structure d'arrêt de tige de maintien (6.1),
- la tige de maintien (6), partant de la position intermédiaire, peut être poussée avec une extrémité côté arrêt sur la structure d'arrêt d'échelle (7) ou peut être poussée dans la structure d'arrêt d'échelle (7), et
- la tige de maintien (6) est bloquée dans la position d'utilisation dans un état poussé sur la structure d'arrêt d'échelle (7) ou poussé dans la structure d'arrêt d'échelle (7), et une extrémité libre de la tige de maintien (6) opposée à l'extrémité côté arrêt est disposée au-dessus de l'échelle (3) dans la direction de montée.

2. Agencement d'échelle (1) selon la revendication 1, **caractérisé en ce que**
- l'échelle (3) présente au moins un gradin (3.1 à 3.4),
- le gradin (3.1 à 3.4) présente une surface de marche (3.1.1. 3.2.1. 3.3.1) et une surface frontale (3.1.2. 3.2.2. 3.3.2), et
- la découpe (A1) s'étend dans au moins une section de la surface de marche (3.1.1. 3.2.1. 3.3.1) et dans au moins une section adjacente de la surface frontale (3.1.2. 3.2.2. 3.3.2).

3. Agencement d'échelle (1) selon la revendication 1 ou 2,
**caractérisé en ce que** la structure d'arrêt d'échelle (7) présente une découpe d'arrêt (7,1) pour recevoir la structure d'arrêt de tige de maintien (6.1).

4. Agencement d'échelle (1) selon la revendication 3,
**caractérisé en ce que** la découpe d'arrêt (7,1) est réalisée au moins dans une surface de marche (3,1.1, 3,2.1, 3,3.1) d'un autre gradin (3,1 à 3,4) disposé en dessous du gradin (3,1 à 3,4) présentant la découpe (A1) dans la direction de montée.

5. Agencement d'échelle (1) selon l'une des revendications précédentes,
**caractérisé en ce que** l'échelle (3) présente une structure de guidage qui guide dans la direction de la structure d'arrêt d'échelle (7) pour guider la structure d'arrêt de tige de maintien (6.1) pendant le pivotement.

6. Agencement d'échelle (1) selon l'une des revendications précédentes, **caractérisé en ce que**
- la tige de maintien (6) présente au moins un élément de butée (6,3),
- l'élément de butée (6,3) est disposé dans une zone de la tige de maintien (6) située entre la découpe (A1) et la structure d'arrêt d'échelle (7), et
- l'élément de butée (6,3) agrandit par sections une section transversale d'une surface d'enveloppe de la tige de maintien (6) de telle sorte que les dimensions de la section transversale de la surface d'enveloppe dans cette section sont plus grandes dans au moins une direction qu'une section transversale de la découpe (A1).

7. Agencement d'échelle (1) selon l'une des revendications 3 à 6,
**caractérisé en ce que**
- la tige de maintien (6) présente au moins un élément de butée (6,2),
- l'élément de butée (6.2) est disposé dans une zone de la tige de maintien (6) située entre la découpe (A1) et la découpe d'arrêt (7.1) de la structure d'arrêt d'échelle (7), et
- l'élément de butée (6.2) agrandit par sections une section transversale d'une surface d'enveloppe de la tige de retenue (6) de telle sorte que les dimensions de la section transversale de la surface d'enveloppe dans cette section sont plus grandes dans au moins une direction qu'une section transversale de la découpe d'arrêt (7.1).

8. Agencement d'échelle (1) selon l'une des revendications précédentes,
**caractérisé en ce que** l'échelle (3) présente au moins un longeron (3.5, 3.6) auquel sont fixés un nombre de gradins (3.1 à 3.4),
- un élément de longeron étant disposé ou réalisé sur le longeron (3.5, 3.6), lequel présente la découpe (A1) à travers laquelle la tige de maintien (6) est guidée, et/ou
- un élément de longeron étant disposé ou réalisé sur le longeron (3.5, 3.6), lequel présente la structure d'arrêt d'échelle (7).

9. Agencement d'échelle (1) selon l'une des revendications précédentes,
**caractérisé en ce qu'**un agencement de rangement (V) pour ranger la barre de maintien (6) dans sa position de non-utilisation est réalisé ou disposé sur l'échelle (3).

10. Agencement d'échelle (1) selon l'une des revendications précédentes,
**caractérisé en ce que**, au moins dans la position de non-utilisation de l'échelle (3), l'agencement de rangement (V) s'étend au moins sensiblement perpendiculairement à une section transversale libre de la découpe (A1) à travers laquelle la tige de maintien (6) est guidée.

11. Agencement d'échelle (1) selon la revendication 9 ou 10,
**caractérisé en ce que** l'agencement de rangement (V) est positionné à l'intérieur d'un contour de l' échelle (3).

12. Agencement d'échelle (1) selon l'une des revendications précédentes,
**caractérisé en ce que**
- il est prévu une structure de guidage d'échelle (4) qui peut être fixée ou est fixée au véhicule (2),
- l'échelle (3) est monté mobile dans ou sur la structure de guidage d'échelle (4),
- l'échelle (3) peut être extrait de sa position de non-utilisation par l'intermédiaire de la structure de guidage d'échelle (4) dans une position d'échelle intermédiaire, et
- l'échelle (3) peut être transféré de la position intermédiaire à la position d'utilisation par basculement dirigé vers le bas dans la direction de montée.

13. Carrosserie de véhicule (8), présentant un plancher de chargement (9) et au moins un agencement d'échelle (1) selon l'une des revendications précédentes.

14. Carrosserie de véhicule (8) selon la revendication 13,
**caractérisé en ce que**
l'échelle (3) de l'au moins un agencement d'échelle (1) est une échelle extractible, qui
- est disposé dans sa position de non-utilisation dans une position de rangement située au-dessous du plancher de chargement (9),
- peut être extrait par la structure de guidage d'échelle (4) disposée sur la carrosserie de véhicule (8), et
- peut être transféré, par extraction hors de la position de rangement au-delà d'une zone de base du plancher de chargement (9) et par basculement, dans la position d'utilisation, et
la tige de maintien (6) peut être extraite conjointement avec l'échelle (3) et, dans la position d'utilisation, l'échelle (3) peut être transféré de sa position de non-utilisation à sa position d'utilisation.

15. Véhicule (2), présentant une carrosserie de véhicule (8) selon la revendication 13 ou 14.
